# EUROPÄISCHE PATENTSCHRIFT

(11) **EP 3 184 361 B1**
(45) Veröffentlichungstag und Bekanntmachung des Hinweises auf die Patenterteilung: **29.08.2018**
(21) Anmeldenummer: 15202363.6
(22) Anmeldetag: 23.12.2015
(51) Int. Cl.: B60P 7/15

(54) **SPERRSTANGE UND NUTZFAHRZEUG ZUR LADUNGSSICHERUNG**
STOP BAR AND COMMERCIAL VEHICLE FOR SECURING A LOAD
BARRE DE VERROUILLAGE ET VEHICULE UTILITAIRE POUR SECURISATION DE CHARGE

(43) Veröffentlichungstag der Anmeldung: 28.06.2017
(73) Patentinhaber: Schmitz Cargobull AG, 48341 Altenberge (DE)
(72) Erfinder: Maier, Christof, 41564 Kaarst (DE); Röper, Philipp, 40239 Düsseldorf (DE); RICHERT, Dennis, 48282 Emsdetten (DE)
(74) Vertreter: Cohausz & Florack

(56) Entgegenhaltungen:
- DE-A1- 4 335 478
- DE-U1- 20 218 023
- US-A1- 2012 034 023

## Beschreibung

Die Erfindung betrifft eine Sperrstange zur Ladungssicherung in einem Aufbau eines Nutzfahrzeugs, wobei die Sperrstange zwei gegeneinander ausziehbare Sperrstangenelemente und eine Verspanneinrichtung zum Verspannen der Sperrstange zwischen einem Dach und einem Ladeboden des Aufbaus unter Bereitstellung einer Klemmkraft in Längsrichtung der Sperrstange aufweist, wobei an einem Ende der Sperrstange ein Stützfuß um eine Schwenkachse schwenkbar angebunden ist und wobei der Stützfuß wenigstens einen äußeren Zahn zum formschlüssigen Eingreifen in wenigstens eine Vertiefung eines Ladebodens aufweist. Ferner betrifft die Erfindung einen Aufbau eines Nutzfahrzeugs mit einem Ladeboden, einem Dach und wenigstens einer sich zwischen dem Dach und dem Ladeboden erstreckenden Sperrstange, vorzugsweise nach einem der Ansprüche 1 bis 8, wobei eine Sperrstange zwischen dem Dach und dem Ladeboden des Aufbaus unter Bereitstellung einer Klemmkraft verspannt ist und wobei an einem Ende der Sperrstange ein Stützfuß um eine Schwenkachse schwenkbar gehalten ist und mit wenigstens einem äußeren Zahn formschlüssig in wenigstens eine Vertiefung des Ladebodens eingreift. Die DE 202 18 023 U1 offenbart eine Sperrstange nach dem Oberbegriff des Anspruchs 1 und einen Aufbau eines Nutzfahrzeuges nach dem Oberbegriff des Anspruchs 9. Nutzfahrzeuge der vorgenannten Art können beispielsweise Lastkraftwagen, Anhänger und Sattelauflieger sein. Dabei sind die Nutzfahrzeuge insbesondere für den Transport von Gütern, insbesondere Stückgütern, im öffentlichen Straßenverkehr vorgesehen. Zu diesem Zweck weisen die Nutzfahrzeuge unterschiedliche Arten von Aufbauten auf, welche Laderäume zur Aufnahme der zu transportierenden Güter bereitstellen. Es sind beispielsweise sogenannte Planenaufbauten bekannt, welche wenigstens eine Plane zum Verschließen wenigstens einer Seite und/oder des Dachs des Planenaufbaus aufweisen. Wenn die Plane entlang der Seitenwand verschoben werden kann, spricht man auch von sogenannten Curtainsidern. Wenn das Dach von Planaufbauten von einer aufschiebbaren Plane verschlossen werden kann, wird das Dach auch als Schiebverdeck bezeichnet. Unabhängig davon weist das Dach typischerweise eine Versteifung durch Streben, etwa in Form von sich quer zum Aufbau zwischen seitlich angeordneten Längsholmen erstreckenden Spriegeln, auf.

Bei sogenannten Kofferaufbauten sind dagegen die Seitenwände und das Dach durch feste Wände verschlossen. Auch die Stirnwand ist bei Kofferaufbauten typischerweise als feste Wand ausgebildet, während die Rückwand meist aus zwei Flügeltüren, einem Rolltor oder dergleichen gebildet wird, um den Kofferaufbau von hinten beladen zu können. Die Seitenwände, das Dach und die Stirnwand von Kofferaufbauten sind in der Regel in Form von mehrschichtigen Paneelen aufgebaut, die eine innere strukturgebende Decklage, eine äußere strukturgebende Decklage und eine Kernlage aus einem geschäumten Kunststoff umfassen. Die Decklagen können selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und infolge des geschäumten Kunststoffs eine hohe thermische Isolation bereitstellen, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Die genannten Aufbauten weisen eine Bodenstruktur auf, von der die zu transportierenden Güter getragen werden. Die Bodenstruktur wird ihrerseits von einem Chassis des Nutzfahrzeugs getragen und umfasst an der Oberseite eine als Ladeboden der Bodenstruktur bezeichnete Lage, auf der die zu transportierende Ladung abgestellt werden kann und die im Aufbau betreten bzw. zum Be- und Entladen des Aufbaus, etwa von Hubwagen oder Staplern, befahren werden kann.

Zudem ist es bekannt, in den zuvor beschriebenen Aufbauten sogenannte Sperrstangen zur Ladungssicherung der im Laderaum angeordneten Güter einzusetzen. Auf diese Weise soll verhindert werden, dass die Ladung versehentlich verrutscht. Dies kann beispielsweise mit Sperrstangen erfolgen, die horizontal zwischen Seitenwänden montiert werden. Diese Sperrstangen sind typischerweise an beiden Enden rein formschlüssig in Aufnahmen der Seitenwände aufgenommen. Sofern im Dach und im Boden des Aufbaus entsprechende Aufnahmen vorgesehen sind, können auch vertikal ausgerichtete Sperrstangen rein formschlüssig in den Aufbauten montiert werden. Gerade im Ladeboden sind solche Aufnahmen aber unerwünscht, weil sie schnell verschmutzen und schlecht zu reinigen sind. Zudem beeinträchtigen entsprechende Aufnahmen das Befahren des Ladebodens mit Hubwagen oder dergleichen, weil die Räder oder Rollen beim Befahren des Ladebodens in die Aufnahmen gelangen können. Daher werden vielfach Ladeböden ohne entsprechende Aufnahmen eingesetzt, in denen Sperrstangen in vertikaler Ausrichtung zwischen dem Dach und dem Ladeboden verspannt werden können, um die Ladung zuverlässig gegenüber einem Verrutschen zu sichern.

Ein Verspannen der Sperrstange meint vorliegend, dass die Sperrstange so zwischen dem Dach und dem Ladeboden verklemmt bzw. eingeklemmt wird, dass die Sperrstange gegen das Dach und den Ladeboden drückt, und zwar beispielsweise mit einer von der Sperrstange selbst und/oder dem Aufbau ausgeübten Rückstellkraft. Dieses Verklemmen der Sperrstange im Aufbau führt zu einem Kraftschluss und bewirkt eine Klemmkraft, mit der die Sperrstange gegen das Dach und den Ladeboden gepresst wird. Zusätzlich kann die Sperrstange noch formschlüssig im Aufbau gehalten werden. Zur zufriedenstellenden Ladungssicherung wird die Sperrstange aber erst durch die zuvor beschriebene Klemmkraft befähigt. Während ein Formschluss zwischen Sperrstange und Dach durch ein Eingreifen der Sperrstange in eine, insbesondere für diesen Zweck vorgesehene, Aufnahme erfolgen kann, kann zur formschlüssigen Verbindung zwischen der Sperrstange und dem Ladeboden eine Profilstruktur des Ladebodens genutzt werden. Ladeböden sind, insbesondere im Falle von metallischen Ladeböden, vielfach mit einem Profil aus Vertiefungen und Erhebungen versehen, um eine hinreichende Rutschfestigkeit zu gewährleisten. Dadurch soll vermieden werden, dass Personen auf dem Ladeboden ausrutschen oder die Ladung verrutscht. Anders als die Aufnahmen im Dach weist die Profilierung des Ladebodens nur sehr schmale und flache Vertiefungen auf, weshalb eine reine formschlüssige Verbindung zwischen dem Ladeboden und der Sperrstange zur Ladungssicherung typischerweise ungeeignet ist.

Um dennoch einen Formschluss zwischen Sperrstange und Ladeboden zu erzeugen, sind Sperrstangen bekannt, die einen Stützfuß mit einer elastischen Sohle, etwa aus Kunststoff, aufweisen, die infolge ihrer Elastizität in die Profilstruktur des Ladebodens hineingedrückt werden können. Ferner sind Sperrstangen mit Stützfüßen bekannt, deren starre Sohlen eine mit der Profilstruktur des Ladebodens wenigstens teilweise korrespondierende Profilierung aufweisen. Die korrespondierenden Profilstrukturen sind jedoch recht fein ausgebildet, so dass es auch in diesem Falle für eine zuverlässige Ladungssicherung unumgänglich ist, die Sohle der Sperrstange durch Verspannen derselben im Aufbau in die Profilstruktur des Ladebodens zu pressen. Auf einen den Formschluss ergänzenden Kraftschluss zwischen der Sperrstange und dem Aufbau kann also nicht verzichtet werden.

Um das Handling der Sperrstangen zu vereinfachen, sollten die Sperrstangen möglichst leicht und platzsparend ausgebildet sein. Dies wird dadurch erkauft, dass die Sperrstangen eine verringerte Biegesteifigkeit aufweisen. Bei der Ladungssicherung kann es daher vorkommen, dass sich die Sperrstange unter der Last der zu sichernden Ladung durchbiegt. Weist die Sperrstange zudem einen starr an der Sperrstange gehaltenen Stützfuß auf, hebt der Stützfuß infolge der Biegung der Sperrstange teilweise vom Boden ab. Dies schwächt die Verbindung zwischen dem Stützfuß und dem Ladeboden und kann zudem zu einem Versagen der Sperrstange bzw. der Ladungssicherung führen. Gegebenenfalls geht dieses Versagen mit einer Beschädigung des Stützfußes oder des Ladebodens einher, was unerwünscht ist und die erneute Verwendung der Sperrstange zur Ladungssicherung beeinträchtigen kann. Daher sind bereits Sperrstangen vorgeschlagen worden, an denen der Stützfuß schwenkbar gehalten ist. Durch die Schwenkbarkeit des Stützfußes wird erreicht, dass die Sohle des Stützfußes auch beim Durchbiegen der Sperrstange weiter vollflächig auf dem Ladeboden aufsteht.

Bei den bekannten Sperrstangen besteht jedoch weiter Optimierungsbedarf, um den parallelen Anforderungen an ein leichtes und platzsparendes Handling, geringe Herstellungskosten und der Aufnahme hoher Ladungssicherungskräfte in zufriedenstellender Weise gerecht zu werden.

Daher liegt der vorliegenden Erfindung die Aufgabe zugrunde, die Sperrstange und das Nutzfahrzeug jeweils der eingangs genannten und zuvor näher beschriebenen Art derart auszugestalten und weiterzubilden, dass hohe Ladungssicherungskräfte aufgenommen werden können, ohne das Handling und die Herstellungskosten der Sperrstange in unverhältnismäßiger Weise zu beeinträchtigen.

Diese Aufgabe ist bei einer Sperrstange nach dem Oberbegriff des Anspruchs 1 dadurch gelöst, dass die Distanz zwischen der Schwenkachse des Stützfußes und der von der Schwenkachse abgewandten Seite des wenigstens einen äußeren Zahns quer zur Längserstreckung der Sperrstange mindestens der fünffachen Distanz zwischen der Schwenkachse und dem freien Ende des wenigstens einen äußeren Zahns in Längsrichtung der Sperrstange entspricht.

Ferner ist die genannte Aufgabe bei einem Aufbau nach dem Oberbegriff von Anspruch 9 dadurch gelöst, dass die Distanz zwischen der Schwenkachse des Stützfußes und der von der Schwenkachse abgewandten Seite des wenigstens einen äußeren Zahns parallel zu einer Ebene des Ladebodens mindestens der fünffachen Distanz zwischen der Schwenkachse und dem freien Ende des wenigstens einen äußeren Zahns senkrecht zur Eben des Ladebodens entspricht.

Die Erfindung hat erkannt, dass sich die Gefahr des Abhebens der Sohle des Stützfußes vom Ladeboden beim Durchbiegen der Sperrstange unter Last durch einfache konstruktive Maßnahmen verringern lässt, die weder das Handling noch die Herstellungskosten der Sperrstange nennenswert beeinflussen. Wesentlich ist in diesem Zusammenhang allgemein gesprochen die Länge des Stützfußes ausgehend von der Schwenkachse im Verhältnis zur Höhe des Stützfußes bis zur Schwenkachse. Wenn die Schwenkachse weit unten und sehr weit entfernt von der Spitze des Stützfußes angeordnet ist, kann auch bei höheren Ladungssicherungskräften verhindert werden, dass ein Moment auf die Sperrstange wirkt, welches zum Abheben der Ferse des Stützfußes führt, wenn sich die Sperrstange durchbiegt. Vielmehr kann erreicht werden, dass der Stützfuß auch unter erhöhter Last flach gegen den Ladeboden bzw. in das Profil des Ladebodens gedrückt wird.

Ob sich der Stützfuß, insbesondere die Ferse des Stützfußes, unter Last vom Boden abhebt ist davon abhängig, ob auf den Stützfuß ein Moment um den vorderen Drehpunkt des Stützfußes wirkt und wie groß dieses Moment ist. Der vordere Drehpunkt ist dabei der Punkt bzw. die Achse, um welchen bzw. welche der Stützfuß sich nach oben drehen kann. Um eine formschlüssige Verbindung mit dem Ladeboden bilden zu können, weist der Stützfuß wenigstens einen Zahn auf, der in die Profilstruktur des Ladebodens eingreifen kann. Drehen wird sich der Stützfuß dann um diesen einen Zahn oder um den wenigstens einen äußersten, insbesondere vordersten, Zahn. Im Falle einer Reihe nebeneinander vorgesehener Zähne, kann sich der Stützfuß auch um alle diese Zähne drehen. Um einen weiter innen oder hinten angeordneten Zahn wird sich der Stützfuß aber auch unter Last nicht drehen. Noch genauer kann der Punkt bzw. die Achse, um die sich der Stützfuß drehen kann, durch eine obere Kante der Profilstruktur des Ladebodens, mit der der wenigstens eine äußerste, insbesondere vorderste, Zahn des Stützfußes in Kontakt kommt, wenn dieser beispielsweise nach vorne geschoben wird, beschrieben werden.

Im verspannten Zustand der Sperrstange, die zudem infolge der Ladungssicherung einer Last ausgesetzt ist, wirken im Schwenkpunkt des Stützfußes zwei Kräfte. Wenigstens im Wesentlichen parallel zum Ladeboden wirkt die von der Ladung ausgeübte, sogenannte Ladungssicherungskraft, die gegen die Sperrstange drückt, während wenigstens im Wesentlichen senkrecht zum Ladeboden die Anpresskraft der Sperrstange an den Boden wirkt. Diese beiden Kräfte stehen also bedarfsweise wenigstens etwa im Wesentlichen senkrecht zueinander und können zu einer resultierenden Kraft zusammengefasst werden, die ausgehend von der Schwenkachse schräg nach unten in Richtung des Ladebodens weist. Wenn die resultierende Kraft entlang einer Geraden weist, die den wenigstens einen äußeren Zahn unterhalb desselben passiert, so bewirkt die resultierende Kraft kein Moment um den Drehpunkt bzw. die Drehachse des Stützfußes, insbesondere des wenigstens einen äußeren Zahns, das zum Abheben des Stützfußes führen kann. Die resultierende Kraft bewirkt vielmehr, dass der Stützfuß zumindest im äußeren oder vorderen Bereich in die Profilstruktur des Ladebodens gedrückt wird. Allerdings ergibt sich ein entsprechendes Moment zum Anheben der Ferse des Stützfußes, wenn die durch die resultierende Kraft definierte Gerade den Drehpunkt bzw. die Drehachse des Stützfußes, insbesondere des wenigstens einen äußeren Zahns, oberhalb des Drehpunkts oder der Drehachse passiert. Ob sich dann die Ferse des Stützfußes tatsächlich vom Ladeboden abhebt und wie weit dies der Fall ist, hängt von der Größe des Moments um diesen Drehpunkt bzw. diese Drehachse ab.

Weiterhin ist erkannt worden, dass sich hinreichende Ladungssicherungskräfte ohne ein Anheben des Stützfußes über die Sperrstange ableiten lassen, wenn der sich parallel zum Ladeboden oder einer durch den Ladeboden definierten Ebene ergebende Abstand von der Schwenkachse des Stützfußes zu der von der Schwenkachse abgewandten Seite des wenigstens einen äußeren Zahns wenigstens um einen Faktor 5 größer ist als der sich senkrecht zur Ebene des Ladebodens oder dem Ladeboden selbst ergebende Abstand vom freien Ende des wenigstens einen äußeren Zahns von der Schwenkachse des Stützfußes. Bezogen auf die Sperrstange selbst kann dieses Längenverhältnis analog ausgedrückt werden als eine quer zur Längserstreckung der Sperrstange abgetragene Distanz zwischen der Schwenkachse des Stützfußes und der von der Schwenkachse abgewandten Seite des wenigstens einen äußeren Zahns, die wenigstens fünfmal so groß ist wie die in Längsrichtung der Sperrstange abgetragene Distanz zwischen der Schwenkachse und dem freien Ende des wenigstens einen äußeren Zahns.

Im Ergebnis können auf die beschriebene Weise Ladungssicherungskräfte aufgenommen werden, die fünfmal so groß wie die Anpresskraft an den Ladeboden sind, ohne dass die Gefahr besteht, dass sich die Sohle des Stützfußes anhebt. Tatsächlich können sogar noch größere Ladungssicherungskräfte aufgenommen werden, ohne dass die Sperrstange versagt, da sich der Stützfuß beim Überschreiten des zuvor diskutierten Kraftverhältnisses nur sehr allmählich um seinen Drehpunkt bzw. seine Drehachse kippt und geringes Abheben des Stützfußes in der Praxis noch toleriert werden kann.

Grundsätzlich können größere Ladungssicherungskräfte aufgenommen werden, wenn die Klemmkräfte der Sperrstange respektive die Anpresskräfte gegen den Ladeboden gesteigert werden. Daher bieten sich vorliegend insbesondere Aufbauten in Form von Kofferaufbauten an, da diese im Vergleich zu Planenaufbauten grundsätzlich stabilere Dächer aufweisen und auch insgesamt stabiler ausgebildet sind. Dennoch kann die zuvor beschriebene Ladungssicherung auch im Zusammenhang mit einem Aufbau in Form eines Planenaufbaus zweckmäßig sein. Dies gilt umso mehr, wenn die Sperrstange mit einem steifen Spriegel des Dachs zusammenwirkt oder das Dach zusätzlich Verstärkungen und Aussteifungen zum Zwecke der Ladungssicherung mit einer Sperrstange aufweist.

Der Stützfuß der Sperrstange weist bevorzugt eine Mehrzahl von Zähnen auf, um den Formschluss zwischen der Sperrstange und dem Ladeboden zu erhöhen und um sicherzustellen, dass die vorhandenen Zähne auch tatsächlich mit hoher Wahrscheinlichkeit in wenigstens eine Vertiefung des Ladenbodens eingreifen. Aus diesen Gründen ist es weiter bevorzugt, wenn die Zähne gleichmäßig oder ungleichmäßig über die Längserstreckung und/oder Quererstreckung des Stützfußes verteilt sind. Dabei ist es besonders bevorzugt, wenn die Zähne in Längsrichtung des Stützfußes voneinander beabstandet sind. In Querrichtung des Stützfußes können sich die Zähne alternativ oder zusätzlich über wenigstens ein Großteil der Breite, wenn nicht gar über im Wesentlichen die gesamte Breite, des Stützfußes erstrecken. Dabei können die Zähne in Querrichtung voneinander beabstandet sein oder die Zähne können längliche Stege bilden. Bei einer Mehrzahl von Zähnen wird vorliegend der wenigstens eine äußerste Zahn als der wenigstens eine äußere Zahn angesehen. Es kann sich also um einen äußeren Zahn oder mehrere äußerste Zähne handeln, die dann insbesondere einen wenigstens im Wesentlichen identischen Abstand zur Schwenkachse des Stützfußes aufweisen. All die möglicherweise vorhandenen, aber nicht äußersten Zähne des Stützfußes stellen dagegen keine äußeren Zähne dar. Es handelt es ich vielmehr um einen oder mehrere innere Zähne, um die der Stützfuß aber nicht zu schwenken neigt. Diese inneren Zähne sind also erfindungsgemäß von untergeordneter Bedeutung, auch wenn diese inneren Zähne praktisch wenigstens im Wesentlichen für den Formschluss zwischen dem Stützfuß und dem Ladeboden verantwortlich sein können.

Nachfolgend werden der besseren Verständlichkeit halber und zur Vermeidung unnötiger Wiederholungen die Sperrstange und der Aufbau der zuvor beschriebenen Art gemeinsam beschrieben, ohne jeweils immer im Einzelnen zwischen der Sperrstange und dem Aufbau zu unterscheiden. Dem Fachmann ist anhand des Kontextes jeweils ersichtlich, welche Merkmale für die Sperrstange und/oder den Aufbau bevorzugt sind.

Bei einer ersten besonders bevorzugten Ausgestaltung der Sperrstange weist das wenigstens eine zuvor beschriebene Längenverhältnis einen Faktor von sieben, bevorzugt von neun, insbesondere von zehn oder gar elf auf. Mit steigendem Längenverhältnis steigt die von der Sperrstange zuverlässig aufzunehmende Ladungssicherungskraft, was grundsätzlich erwünscht ist. Dies wird jedoch beispielsweise mit einer tiefer liegenden Schwenkachse des Stützfußes und dem damit verbundenen höheren konstruktiven Aufwand erkauft. Zudem wächst dabei grundsätzlich die Gefahr, dass der Stützfuß bei unsachgemäßer Verwendung der Sperrstange abreißt. Alternativ oder zusätzlich, kann der Stützfuß aber auch länger ausgebildet werden, um die Distanz zwischen der Schwenkachse und dem wenigstens einen äußeren Zahn zu vergrößern. Dies kann aber Nachteile hinsichtlich des Handlings und des Platzbedarfs der Sperrstange nach sich ziehen. Welcher Faktor dem angegebenen Längenverhältnis sinnvollerweise zukommt, kann daher stark vom jeweiligen Einzelfall abhängen. Anders ausgedrückt kann es zweckmäßig sein, wenn die Distanz zwischen der Schwenkachse des Stützfußes und der von der Schwenkachse abgewandten Seite des wenigstens einen äußeren Zahns quer zur Längserstreckung der Sperrstange mindestens der siebenfachen, vorzugsweise der neunfachen, insbesondere zehnfachen oder elffachen, Distanz zwischen der Schwenkachse und dem freien Ende des wenigstens einen äußeren Zahns in Längsrichtung der Sperrstange entspricht.

Alternativ oder zusätzlich kann aus den zuvor bereits genannten Gründen die Distanz zwischen der Schwenkachse des Stützfußes und der von der Schwenkachse abgewandten Seite des wenigstens einen äußeren Zahns quer zur Längserstreckung der Sperrstange mindestens 50 mm, vorzugsweise 70 mm, insbesondere 90 mm oder 110 mm, betragen. Dies hat sich konstruktiv und hinsichtlich der Ladungssicherung bewährt, wobei auch hier je nach Anwendungsfall unterschiedliche Längen bevorzugt sein können. Gleiches gilt im Übrigen bedarfsweise auch für die Distanz zwischen der Schwenkachse und dem freien Ende des wenigstens einen äußeren Zahns in Längsrichtung der Sperrstange, die bevorzugt höchstens 25 mm, vorzugsweise höchstens 20 mm, insbesondere höchstens 15 mm oder gar höchstens 10 mm, betragen kann. Besonders bevorzugt kann es sein, eine tief angeordnete Schwenkachse mit einer großen Distanz zum wenigstens einen äußeren Zahn vorzusehen, wenn bei begrenzten Klemmkräften der Sperrstange von dieser große Landungssicherungskräfte zuverlässig aufgenommen werden sollen.

Um die Stabilität der Sperrstange auch dann sicherzustellen, wenn sich die Sperrstange unter Last durchbiegt, ist es grundsätzlich von Vorteil, wenn die Schwenkachse des Stützfußes außermittig angeordnet ist. Insbesondere kann die Schwenkachse in Querrichtung zur Sperrstange näher an der dem wenigstens einen äußeren Zahn abgewandten Seite der Sperrstange als an der gegenüberliegenden Seite der Sperrstange angeordnet sein. Anders ausgedrückt ist die Schwenkachse des Stützfußes bevorzugt auf der dem wenigstens einen äußeren Zahn abgewandten Seite der zentralen Längsachse der Sperrstange und/oder der gegeneinander ausziehbaren Sperrstangenelemente angeordnet. Dabei ist es grundsätzlich umso vorteilhafter, je größer der Abstand der Schwenkachse von der zentralen Längsachse ist, sofern dies nicht übermäßig zu Lasten der Stabilität und Steifigkeit der Sperrstage geht. Der entsprechende Abstand beträgt daher beispielsweise wenigstens 10 mm, vorzugsweise wenigstens 15 mm und insbesondere wenigstens 20 mm.

Bei der Montage der Sperrstange kann es hinderlich sein, wenn der Stützfuß zu weit nach unten schwenkt. Dann kann es beispielsweise schwierig sein, den Stützfuß flach auf den Ladeboden zu stellen und den wenigstens einen äußeren Zahn und/oder die etwaigen weiteren Zähne in wenigstens eine Vertiefung der Profilstruktur des Ladebodens einzubringen. Daher kann es zweckmäßig sein, wenn die Sperrstange einen Anschlag zum Begrenzen der Schwenkbewegung des Stützfußes nach unten und/oder, anders ausgedrückt, des wenigstens einen äußeren Zahns weg von dem dem Stützfuß gegenüberliegenden Ende der Sperrstange aufweist. Es reicht nämlich vollkommen aus, wenn der Stützfuß soweit gegenüber dem Rest der Sperrstange geschwenkt werden kann, dass der Stützfuß trotz Durchbiegen der Sperrstange flach auf dem Ladeboden aufstehen kann.

Um hohe Kräfte sicher auf den Ladeboden ableiten zu können, bietet es sich an, wenn der Stützfuß und/oder wenigstens der wenigstens eine äußere Zahn steif und zugleich stabil sind. Dies kann beispielsweise dadurch erreicht werden, dass der wenigstens eine äußere Zahn, vorzugsweise der Stützfuß insgesamt, aus einem metallischen Werkstoff gebildet ist. Besonders bietet es sich dabei aus Gewichtsgründen und Kostengründen an, wenn der metallische Werkstoff Aluminium oder Stahl ist.

Alternativ oder zusätzlich, kann vermieden werden, dass der wenigstens eine äußere Zahn abreißt oder bricht, wenn der wenigstens eine äußere Zahn in Form einer Rippe ausgebildet ist. Der Zahn in Form einer Rippe kann sich dann bedarfsweise weiter bevorzugt über die gesamte Breite des Stützfußes bzw. dessen Sohle im Bereich des Zahns erstrecken.

Bedarfsweise kann die Sperrstange an dem dem Stützfuß gegenüberliegenden Ende einen Stützkopf aufweisen, mit dem die Sperrstange formschlüssig in das Dach eingreifen und kraftschlüssig gegen das Dach drücken kann. Zum formschlüssigen Eingreifen des Stützkopfes in das Dach des Aufbaus kann das Dach wenigstens eine Öffnung und/oder Aufnahme aufweisen. Die Öffnung und/oder die Aufnahme kann dabei insbesondere in einem in das Dach eingelassenen Profil vorgesehen sein, um das Dach angrenzend zum Stützkopf zu verstärken und/oder zu versteifen. So wird vermieden, dass das Dach infolge der auf die Sperrstange wirkenden Ladungssicherungskräfte beschädigt wird. Das Profil kann sich zudem in Längsrichtung des Aufbaus erstrecken und mehrere Öffnungen und/oder Aussparungen aufweisen, um die Sperrstange an unterschiedlichen Positionen in Längsrichtung des Aufbaus festlegen zu können. Allerdings ist die entsprechende Aussteifung des Dachs aufwendig und kostenintensiv. Daher kann das Dach ebenso wie der Ladeboden eine Profilstruktur aufweisen, die wenigstens bereichsweise, insbesondere aber großflächig, Vertiefungen und Erhebungen aufweist. Die Vertiefungen unterscheiden sich darin von den Öffnungen oder Ausnehmen des Dachs, dass die Vertiefungen anders als die Öffnungen und Ausnehmungen nicht groß genug ausgebildet sind, um den Stützkopf an sich aufzunehmen. Die Vertiefungen sind lediglich in der Lage wenigstens einen Zahn des Stützkopfs aufzunehmen, wie dies bereits im Zusammenhang mit dem Stützfuß beschrieben ist. Demnach ist es der Einfachheit halber weiter bevorzugt, wenn der Stützkopf analog zu dem Stützfuß ausgebildet ist. Das bedeutet, dass wesentliche Merkmale des Stützfußes auch am Stützkopf vorgesehen sein können. Dies betrifft insbesondere die zuvor für den Stützfuß beschriebenen und die in den Ansprüchen zum Stützfuß enthaltenen Merkmale. Diese können sowohl teilweise als auch insgesamt am Stützkopf vorgesehen sein, so dass im letztgenannten Fall der Stützkopf und der Stützfuß dieselben wesentlichen Merkmale aufweisen können. Weiter kann es der Einfachheit halber zweckmäßig sein, wenn der Stützfuß und der Stützkopf wenigstens im Wesentlichen identisch ausgebildet sind.

Damit die Klemmkraft der Sperrstange und damit die Anpresskraft auf den Ladeboden sicher aufrechterhalten werden kann, können die gegeneinander ausziehbaren Sperrstangenelemente in die Auszugsrichtung federbelastet sein. Die Sperrstangenelemente können aber auch anderweitig auseinander gedrückt werden, wozu beispielsweise eine Hebelmechanik dienen kann. Dann, aber auch sonst, kann es zur Sicherung der Klemmkräfte und Anpresskräfte zweckmäßig sein, wenn eine Arretiervorrichtung zur Arretierung der gegeneinander ausziehbaren Sperrstangenelemente vorgesehen ist. Insbesondere kann die Sperrstange so in einem zwischen einem Dach und einem Ladeboden eines Aufbaus verspannten Zustand gehalten werden. Besonders einfach gehandhabt werden kann die Sperrstange dabei, wenn die Arretiervorrichtung eventuell zusammen mit dem Auseinderdrücken der gegeneinander ausziehbaren Sperrstangenelemente über einen Bedienhebel bedient wird.

Hinsichtlich der Ladungssicherung ist es bevorzugt, wenn über die Sperrstange eine hohe Anpresskraft der Sperrstange an den Ladeboden bereitgestellt werden kann. Je höher diese Kraft ist, desto stärker wird der Stützfuß gegen den Ladeboden gepresst, was einem lokalen Abheben des Stützfußes vom Ladeboden entgegenwirkt. Allerdings soll die Sperrstange nicht das Dach des Aufbaus beschädigen. Daher ist es zweckmäßig, wenn die Anpresskraft der Sperrstange an den Ladeboden wenigstens 600 N, vorzugsweise wenigstens 800 N, insbesondere wenigstens 1000 N beträgt. Alternativ oder zusätzlich kann zum Schutz des Dachs auch vorgesehen sein, dass die Anpresskraft der Sperrstange an den Ladeboden höchstens 2000 N, vorzugsweise wenigstens 1600 N, insbesondere wenigstens 1300 N, beträgt.

Damit der Stützfuß bzw. der wenigstens eine äußere Zahn sicher im Profil des Ladebodens gehalten und eine Beschädigung des Ladebodens durch die Ladungssicherung vermieden werden kann, ist es grundsätzlich zweckmäßig, den Ladeboden aus einem metallischen Werkstoff zu bilden. Aus Gewichts-und Kostengründen bieten sich dabei insbesondere Aluminium oder Stahl als Werkstoffe an.

Um die Sperrstange schnell und einfach im Aufbau montieren zu können, bietet es sich an, dass der wenigstens eine äußere Zahn formschlüssig in wenigstens eine Rille des Ladebodens eingreift. Eine ganz exakte Positionierung des wenigstens einen äußeren Zahns, jedenfalls in der Längsrichtung der Rille, ist dann nicht zwingend erforderlich. Um zudem einen Formschluss zwischen dem wenigstens einen äußeren Zahn bereitstellen zu können, erstreckt sich die Rille bevorzugt quer zur Längserstreckung des Aufbaus. Die Ladungssicherung erfolgt nämlich insbesondere in der Längsrichtung des Aufbaus, in der dann der Formschluss zwischen dem wenigstens einen äußeren Zahn und dem Ladeboden wirkt.

Da die Ladungssicherung vielfach ein Verrutschen der Ladung nach hinten oder vorne verhindern soll, weist der Stützfuß der wenigstens einen Sperrstange ausgehend von der Schweckachse in Richtung des wenigstens einen äußeren Zahns in Längsrichtung des Aufbaus und/oder Nutzfahrzeugs. Nach vorne kann die Ladung oft durch weitere Ladung gesichert werden, die vorzugsweise bis an die Stirnwand des Aufbaus heranreicht. Besonders zweckmäßig ist es daher, wenn der Stützfuß ausgehend von seiner Schwenkachse mit der Sperrstange nach hinten weist, und zwar bezogen auf den Aufbau und/oder das Nutzfahrzeug. Eine Ladungssicherung nach hinten ist nämlich bei lediglich teilbeladen oder teilentladenen Aufbauten ohne Sperrstangen nur unter erschwerten Bedingen möglich, weshalb der rückwärtigen Ladungssicherung in der Praxis eine besondere Bedeutung zukommt, der mit der hier beschriebenen Sperrstange zweckmäßig Rechnung getragen werden kann.

Um die Sperrstange sicher und fest am Dach in Position zu halten, kann das Dach eine Öffnung oder Aussparung aufweisen, in die die Sperrstange mit einem Stützkopf formschlüssig aufgenommen sein kann. Der Stützkopf ist dabei insbesondere an dem dem Stützfuß gegenüberliegenden Ende des Dachs vorgesehen.

Alternativ kann vorgesehen sein, dass das Dach an der in Richtung des Ladebodens weisenden Seite wenigstens abschnittsweise eine Profilstruktur aufweist. Diese kann ähnlich oder gar identisch wie die Profilstruktur des Ladebodens ausgebildet sein. Dies ist aber nicht zwingend erforderlich. Jedenfalls sind, vorzugsweise anstelle von Öffnungen und Ausnehmungen, Vertiefungen und Erhebungen vorgesehen, wie dies ebenfalls beim Ladeboden der Fall ist. Die Profilstruktur kann einfach vorgesehen werden, indem eine die Profilstruktur aufweisende Lage am Dach montiert, beispielweise mit dem Dach verklebt, wird. Dann müssen keine Öffnungen und Ausnehmungen im Dach vorgesehen werden, die bedarfsweise das Einbringen eines separaten Profils erforderlich machen. Wenn das Dach eine Profilstruktur ähnlich wie beim Ladeboden aufweist, bietet es sich weiter an, wenn der Stützkopf analog zum Stützfuß ausgebildet ist. Was unter einer entsprechenden analogen Ausgestaltung verstanden wird, ist zuvor bereits im Zusammenhang mit der Sperrstange beschrieben worden. Der Stützfuß kann also kurz gefasst wesentliche Merkmale aufweisen, die vorliegend für den Stützfuß beschrieben worden sind und bedarfsweise aber nicht zwingend auch beim Stützfuß vorgesehen sind. Zur Vermeidung unnötiger Wiederholungen werden diese Merkmale vorliegend nicht erneut auch für den Stützkopf und/oder die Verbindung zwischen dem Stützkopf und dem Dach beschrieben, da dem Fachmann ersichtlich ist, welche Merkmale in welcher Weise und warum auch für den Stützkopf bevorzugt sein können. Der Einfachheit halber können Stützfuß und Stützkopf gleichartig oder sogar wenigstens im Wesentlichen identisch ausgebildet sein. Dabei gelten dann für die Verbindung zwischen dem Dach und dem Stützkopf im Wesentlichen dieselben Prinzipien, wie sie vorliegend für die entsprechenden Merkmale des Stützfußes und/oder des Ladebodens beschrieben sind. In einem besonders bevorzugten Fall ist die Sperrstange so ausgebildet, dass es unerheblich ist, in welcher Ausrichtung die Sperrstange montiert wird, d.h. welches Ende der Sperrstange oben oder unten ist.

Um die Sperrstange sicher in Position halten zu können, damit die Ladungssicherung sichergestellt wird, kann die Sperrstange insbesondere wenigstens im Wesentlichen senkrecht zur Ebene des Ladebodens ausgerichtet sein. Dann wirkt auch die Klemmkraft wenigstens im Wesentlichen vertikal und damit wenigstens im Wesentlichen senkrecht zur Ebene des Ladebodens. Im Ergebnis können dann unter Umständen höhere Ladungssicherungskräfte aufgenommen werden, als wenn die Sperrstange schräg im Aufbau montiert wäre. Alternativ kann es zur Aufnahme höherer Ladungssicherungskräfte günstig sein, wenn die Sperrstange zur zu sichernden Ladung hin gegenüber der Vertikalen und der Horizontalen geneigt ist, und zwar insbesondere mit dem vom Stützfuß abgewandten Ende der Sperrstange.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Aufbau und einer erfindungsmäßen Sperrstange in einer perspektivischen, schematischen Ansicht,
- Fig. 2: ein Detail des Aufbaus gemäß Fig. 1 mit einer Sperrstange in einer Seitenansicht,
- Fig. 3: die Sperrstange gemäß Fig. 2 in einer Detailansicht von der Seite,
- Fig. 4: ein Detail der Verbindung zwischen der Sperrstange aus Fig. 2 mit dem Ladeboden,
- Fig. 5: ein erstes Kräftegleichgewicht an dem Stützfuß der Sperrstange gemäß Fig. 2 und
- Fig. 6: ein zweites Kräftegleichgewicht an dem Stützfuß der Sperrstange gemäß Fig. 2.

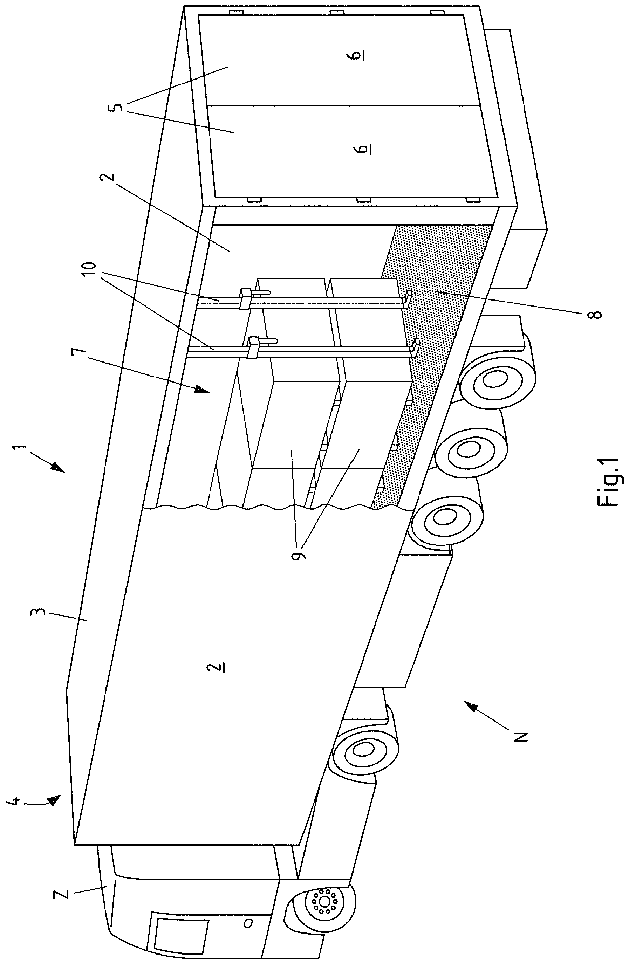

In der Fig. 1 ist ein Nutzfahrzeug N in Form eines Sattelaufliegers mit einem Aufbau 1 in Form eines Kofferaufbaus dargestellt, das von einer Zugmaschine Z gezogen wird. Der Aufbau 1 umfasst zwei Seitenwände 2, ein Dach 3 und eine Stirnwand 4, die jeweils aus mehrschichtigen Paneelen gebildet werden. Die Rückwand 5 des Aufbaus wird durch zwei Flügeltüren 6 gebildet, über welche der Aufbau 1 be- und entladen werden kann. Bei dem dargestellten und insoweit bevorzugten Aufbau 1 ist eine Seitenwand 2 teilweise weggelassen worden, um den Blick in den Laderaum 7 und auf den Ladeboden 8 des Aufbaus 1 zu ermöglichen. Auf dem Ladeboden 8 ist Ladung 9 auf Paletten abgestellt, die durch zwei Sperrstangen 10 gegenüber einem versehentlichen Verrutschen nach hinten gesichert sind. Zu diesem Zweck erstrecken sich die Sperrstangen 10 vertikal zwischen dem Ladeboden 8 und dem Dach 3 des Aufbaus 1. Die zu sichernde Ladung 9 befindet sich zudem in Anlage an den Sperrstangen 10.

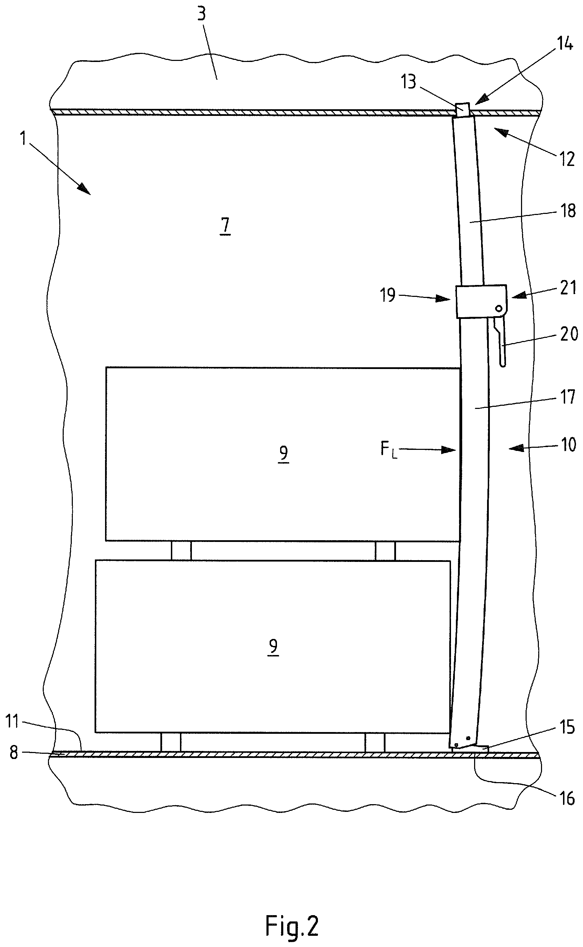

In der Fig. 2 ist die Ladungssicherung im Detail von der Seite dargestellt, wobei die Ladung 9 auf die dargestellte Sperrstange 10 eine Ladungssicherungskraft F_{L} überträgt, die zu einem Durchbiegen der Sperrstange 10 in Richtung der Ladungssicherungskraft F_{L} führt. Die Ladungssicherungskraft F_{L} ist dabei parallel zum Ladeboden 8 bzw. parallel zu einer Ebene des Ladebodens 8 ausgerichtet. Die Ebene des Ladebodens 8 wird durch die Ausrichtung des Ladebodens 8 definiert und die Ebene ist im Wesentlichen parallel etwa zur Oberseite 11 des Ladebodens 8. Am oberen freien Ende der Sperrstange 10 weist die Sperrstange 10 einen Stützkopf 12 auf, der mit einem Vorsprung 13 in eine Aufnahme 14 des Dachs 3 eingreift und dort folglich formschlüssig gehalten ist. Am unteren Ende der Sperrstange 10 weist die Sperrstange 10 einen Stützfuß 15 auf, der mit seiner Sohle 16 auf dem Ladeboden 8 aufsteht. Zwischen dem Stützfuß 15 und dem Stützkopf 12 erstrecken sich zwei gegeneinander ausziehbare Sperrstangenelemente 17,18. Mit anderen Worten ist die Sperrstange 10 teleskopierbar, um die Sperrstange 10 zwischen dem Dach 3 und dem Ladeboden 8 des Aufbaus 1 verspannen zu können.

Das Verspannen erfolgt bei der dargestellten und insoweit bevorzugten Sperrstange 10 über eine nicht im Einzelnen dargestellte Hebelmechanik 19, mit der die Sperrstangenelemente 17,18 gegeneinander ausgezogen und gegen das Dach 3 einerseits sowie den Ladeboden 8 andererseits gepresst werden können. Zu diesem Zweck umfasst die Hebelmechanik 19 einen Handhebel 20, damit die erforderlichen Klemmkräfte bequem und ohne großen Kraftaufwand aufgebracht werden können. Der Handhebel 20 dient bei der dargestellten und insoweit bevorzugten Sperrstange 10 gleichzeitig zum Arretieren der Sperrstangenelemente 17,18 in der gegen das Dach 3und den Ladeboden 8 verspannten Stellung. Dazu ist der Handhebel 20 mit einer ebenfalls nicht im Einzelnen dargestellten Arretiervorrichtung 21 gekoppelt, die verhindert, dass sich die Sperrstangenelemente 17,18 wieder ineinanderschieben. Dadurch wird letztlich bewirkt, dass die Sperrstange 10 nicht nur formschlüssig, sondern auch kraftschlüssig im Aufbau 1 gehalten wird.

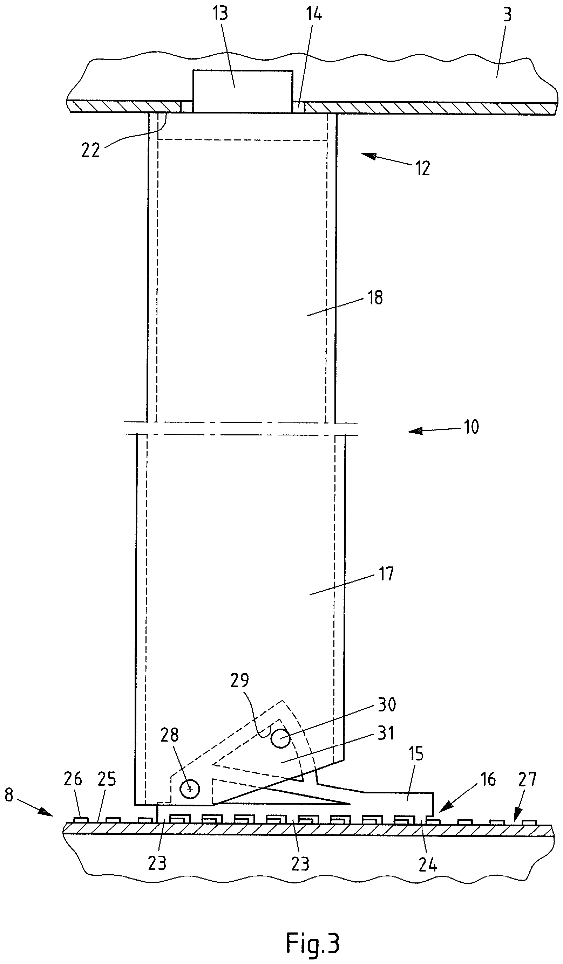

Der Formschluss der Sperrstange 10 mit dem Dach 3 einerseits und dem Ladeboden 8 andererseits ist im Detail in der Fig. 3 dargestellt. Während ein Vorsprung 13 des Stützkopfes 12 der Sperrstange 10 in eine korrespondierende Öffnung oder Aufnahme 14 des Dachs 3 formschlüssig eingreift, legt sich ein Kragen 22 der Sperrstange 10 um diese Öffnung und drückt dort mit einer Anpresskraft von innen gegen das Dach 3, die aus der Klemmkraft resultiert, mit der die Sperrstange 10 zwischen dem Dach 3 und dem Ladeboden 8 verspannt wird. Zwischen dem Dach 3 und der Sperrstange 10 herrscht daher auch ein Kraftschluss. Am unteren Ende der Sperrstange 10 wird ein Formschluss zwischen der Sperrstange 10 und dem Ladeboden 8 über einen Stützfuß 15 der Sperrstange 10 bewirkt, der flach auf dem Ladeboden 8 aufsteht und mit Zähnen 23,24 in Vertiefungen der Profilstruktur des Ladebodens 8 eingreift. Dabei werden bei der dargestellten und insoweit bevorzugten Sperrstange 10 die Zähne 23,24 infolge der beim Verspannen der Sperrstange 10 im Aufbau 1 des Nutzfahrzeugs N aufgebrachten Klemmkraft mit einer korrespondieren Anpresskraft F_{A} gegen den Ladeboden 8 gepresst. Alternativ oder zusätzlich könnten auch andere Teile des Stützfußes 15 gegen den Ladeboden 8 gepresst werden. Etwa für den Fall, dass die Zähne 23,24 des Stützfußes 15 kürzer wären als die Tiefe der Vertiefungen 25, könnte der Stützfuß mit seiner Sohle 16 gegen die Erhebungen 26 des Ladebodens 8 gepresst werden. Jedenfalls wird über dem Stützfuß 15 jedoch eine formschlüssige und eine kraftschlüssige Verbindung der Sperrstange 10 mit dem Ladeboden 8 bereitgestellt.

Bei dem dargestellten und insoweit bevorzugten Aufbau 1weist der Stützfuß 15 in Längsrichtung des Aufbaus 1, insbesondere nach hinten. Zudem sind die Zähne 23,24 in Form von Stegen ausgebildet, die sich in Querrichtung zum Stützfuß 15 und in Querrichtung zum Aufbau 1, insbesondere wenigstens im Wesentlichen über die gesamte Breite des Stützfußes 15, erstrecken. In der Längsrichtung sind die Zähne 23,24 der dargestellten und insoweit bevorzugten Sperrstange 10 gleichmäßig voneinander beabstandet, um in gleichmäßig voneinander beabstandeten Querrillen 27 des Ladebodens 8 einzugreifen.

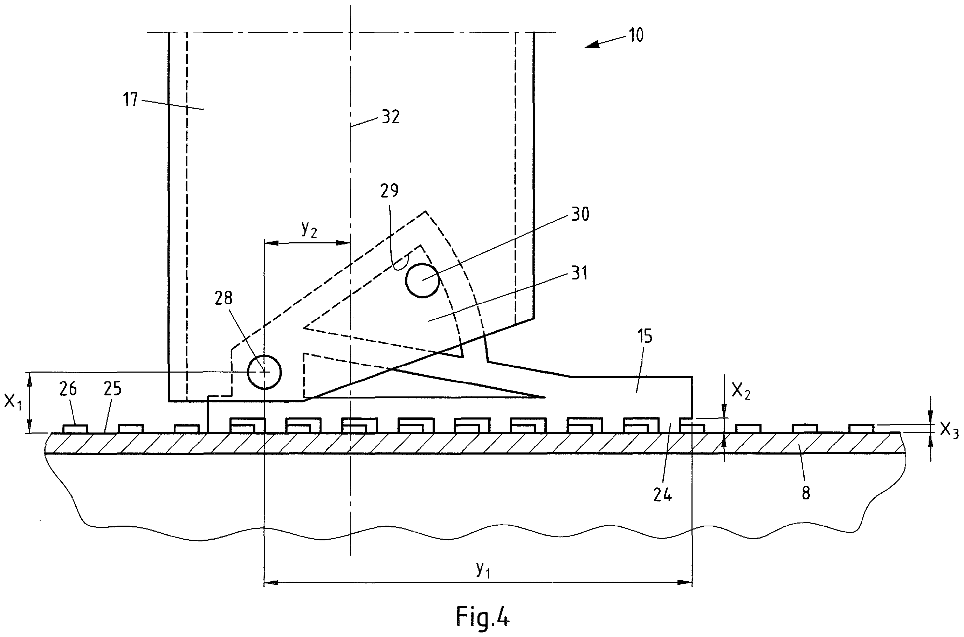

Der in der Fig. 4 dargestellte Stützfuß 15 ist um eine Schwenkachse 28 schwenkbar an der Sperrstange 10 gehalten bzw. in die Sperrstange 10 integriert, um ein Durchbiegen der Sperrstange 10 in Richtung der Ladungssicherungskraft F_{L} zu ermöglichen, ohne dass sich zwangsweise der hintere, der Ladung 9 zugewandte Teil des Stützfußes 15, der auch als die Ferse des Stützfußes 15 bezeichnet werden kann, vom Ladeboden 8 abhebt. Die Schwenkbewegung des Stützfußes 15 ist nach oben durch die Sperrstange 10 selbst und nach unten durch einen Anschlag 29 begrenzt. Der Anschlag 29 wird bei der dargestellten und insoweit bevorzugten Sperrstange 10 durch ein Stiftelement 30 und eine Ausnehmung 31 gebildet, die in Anlage aneinander geraten, wenn der Stützfuß 15 weit genug um die Schwenkachse 28 nach unten geschwenkt wird. Dabei kann die Ausnehmung 31 als Führung für das Stiftelement 30 ausgebildet sein, wobei die Ausnehmung 31 und das Stiftelement 30 auch während der Führung aneinander anliegen können, was zur Stabilisierung der Verbindung zwischen dem Stützfuß 15 und den übrigen Teilen der Sperrstange 10 beitragen kann.

Bei dem parallel zum Ladeboden 8 gesehen am weitesten von der Schwenkachse 28 des Stützfußes 15 beabstandete Zahn 24, der auch als der vorderste Zahn 24 angesehen werden kann, handelt es sich um den wenigstens einen äußeren Zahn 24 nach vorliegendem Sprachgebrauch. Wenn der Stützfuß 15 infolge der auf die Sperrstange 10 übertragenen Ladungssicherungskräfte F_{L} nach vorne kippt und dabei am hinteren Ende vom Ladeboden 8 abhebt, dreht sich der Stützfuß 15 um den äußeren Zahn 24, und zwar um eine Achse auf der Höhe der dem äußeren Zahn 24 zugewandten oberen Kante der an den Zahn 24 angrenzenden Erhebung 26. Ein entsprechendes Drehen des Stützfußes 15 wird jedoch wenigstens für die bestimmungsgemäß aufzunehmenden Ladungssicherungskräfte F_{L} verhindert, indem die Schwenkachse 28 des Stützfußes 15 entsprechend tief in Bezug zum Abstand des äußeren Zahns 24 von der Schwenkachse 28 angeordnet ist. Dies verhindert letztlich das Auftreten eines Moments, das den Stützfuß 15 zum Schwenken und teilweisen Abheben vom Ladeboden 8 veranlassen könnte. Bei der dargestellten Sperrstange 10 beträgt der senkrecht zum Ladeboden 8 bestimmte Abstand x₁ der Schwenkachse 28 von dem freien Ende des äußeren Zahns 24 etwa 10 mm, während die Länge x₂ der Zähne 23,24 etwa 1,5 mm beträgt und die Erhebungen 26 eine Höhe x₃ von etwa 1 mm aufweist. All diese Längen stellen Abstände ausschließlich in einer Richtung senkrecht zum Ladeboden 8 dar. Parallel zum Ladeboden 8 betrachtet beträgt der Abstand y₁ der Schwenkachse 28 des Stützfußes 15 vom äußeren Ende des äußeren Zahns 24 etwa 75 mm und der Abstand y₂ von der zentralen Längsachse 32 der Sperrstange 10 etwa 20 mm. Zudem befindet sich die Schwenkachse 28 des Stützfußes 15 parallel zum Ladeboden 8 gesehen zwischen dem vorderen Zahn 24 und dem hinteren Zahn 23 oder, anders ausgedrückt, in einem durch die Zähne 23,24 des Stützfußes 15 definierten Bereich.

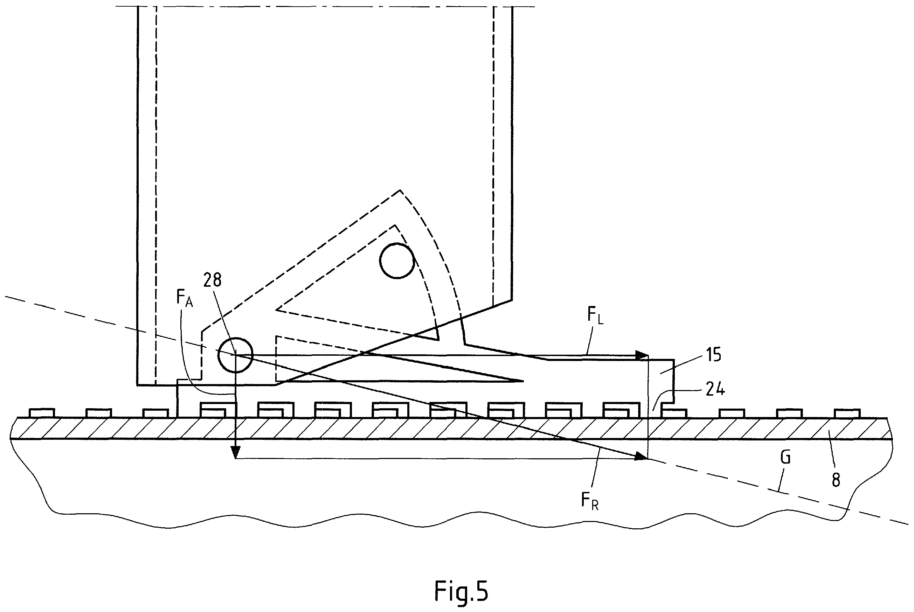

Bestimmungsgemäß kann die Sperrstange 10 beispielsweise dazu vorgesehen sein, Ladungssicherungskräfte F_{L} zwischen 9000 N und 10000 N aufzunehmen. Gleichzeitig ist die Sperrstange dazu ausgebildet, um mit einer Anpresskraft F_{A} zwischen 1100 N und 1200 N gegen den Ladeboden 8 gepresst zu werden. Die entsprechenden Kräfte F_{L}, F_{A} können entsprechend der Fig. 5 als Vektoren dargestellt werden, die an der Schwenkachse 28 des Stützfußes 15 angreifen. Die resultierende Kraft F_{R} definiert dann eine Gerade G, die den äußeren Zahn 24 unterhalb des freien Endes des äußeren Zahns 24 passiert. Es ergibt sich also kein den Stützfuß 15 unter einem teilweisen Abheben von dem Ladeboden 8 in Richtung des äußeren Zahns 24 schwenkendes Moment. Vielmehr wird der Stützfuß 15 gegen den Ladeboden 8 gepresst. Je steiler die resultierende Kraft F_{R} zum Ladeboden 8 verläuft, umso mehr ist dies der Fall.

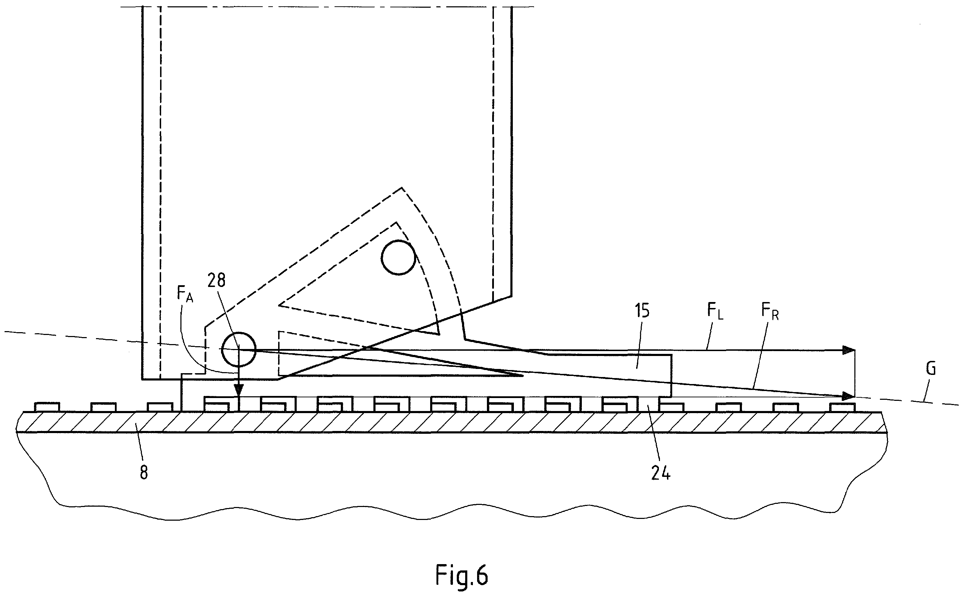

Anders stellt sich die in der Fig. 6 dargestellte Situation dar. Hier ist die Ladungssicherungskraft F_{L} so hoch und die Anpresskraft F_{A} so hoch, dass der an der Schwenkachse 28 des Stützfußes 15 angreifende und die resultierende Kraft F_{R} darstellende Vektor eine Gerade G definiert, die den äußeren Zahn 24 oberhalb des äußeren Zahns 24 passiert. Es ergibt sich somit ein Moment um den äußeren Zahn 24, das zu einem teilweisen Abheben des Stützfußes 15 vom Ladeboden 8 und Abkippen in Richtung des äußeren Zahns 24, also vorliegend nach vorne, führen kann. Es handelt sich daher um eine nicht bestimmungsgemäß aufzunehmende Ladungssicherungskraft F_{L} und/oder es ist die Sperrstange 10 nicht mit der vorbestimmten Klemmkraft im Aufbau 1 verspannt worden, so das eine zu geringe Anpresskraft F_{A} resultiert.

## Patentansprüche

1. Sperrstange (10) zur Ladungssicherung in einem Aufbau (1) eines Nutzfahrzeugs (N), wobei die Sperrstange (10) zwei gegeneinander ausziehbare Sperrstangenelemente (17,18) und eine Verspanneinrichtung (19) zum Verspannen der Sperrstange (10) zwischen einem Dach (3) und einem Ladeboden (8) des Aufbaus (1) unter Bereitstellung einer Klemmkraft in Längsrichtung der Sperrstange (10) aufweist, wobei an einem Ende der Sperrstange (10) ein Stützfuß (15) um eine Schwenkachse (28) schwenkbar angebunden ist und wobei der Stützfuß (15) wenigstens einen äußeren Zahn (24) zum formschlüssigen Eingreifen in wenigstens eine Vertiefung (25) eines Ladebodens (8) aufweist,
**dadurch gekennzeichnet, dass**
die Distanz (y₁) zwischen der Schwenkachse (28) des Stützfußes (15) und der von der Schwenkachse (28) abgewandten Seite des wenigstens einen äußeren Zahns (24) quer zur Längserstreckung der Sperrstange (10) mindestens der fünffachen Distanz (x₁) zwischen der Schwenkachse (28) und dem freien Ende des wenigstens einen äußeren Zahns (24) in Längsrichtung der Sperrstange (10) entspricht.

2. Sperrstange nach Anspruch 1,
**dadurch gekennzeichnet, dass**
die Distanz (y₁) zwischen der Schwenkachse (28) des Stützfußes (15) und der von der Schwenkachse (28) abgewandten Seite des wenigstens einen äußeren Zahns (24) quer zur Längserstreckung der Sperrstange (10) mindestens der siebenfachen, vorzugsweise der neunfachen, insbesondere zehnfachen oder elffachen, Distanz (x₁) zwischen der Schwenkachse (28) und dem freien Ende des wenigstens einen äußeren Zahns (24) in Längsrichtung der Sperrstange (10) entspricht.

3. Sperrstange nach Anspruch 1 oder 2,
**dadurch gekennzeichnet, dass**
die Distanz (y₁) zwischen der Schwenkachse (28) des Stützfußes (15) und der von der Schwenkachse (28) abgewandten Seite des wenigstens einen äußeren Zahns (24) quer zur Längserstreckung der Sperrstange (10) mindestens 50 mm, vorzugsweise 70 mm, insbesondere 90 mm oder 110 mm, beträgt, und/oder dass die Distanz (x₁) zwischen der Schwenkachse (28) und dem freien Ende des wenigstens einen äußeren Zahns (24) in Längsrichtung der Sperrstange (10) höchstens 25 mm, vorzugsweise höchstens 20 mm, insbesondere höchstens 15 mm oder höchstens 10 mm, beträgt.

4. Sperrstange nach einem der Ansprüche 1 bis 3,
**dadurch gekennzeichnet, dass**
die Schwenkachse (28) auf der dem wenigstens einen äußeren Zahn (24) abgewandten Seite der zentralen Längsachse (32) der Sperrstange (10), insbesondere der gegeneinander ausziehbaren Sperrstangenelemente (17,18), angeordnet ist und, vorzugsweise dass die Schwenkachse (28) einen Abstand (y₂) von der zentralen Längsachse (32) von wenigstens 10 mm , vorzugsweise wenigstens 15 mm, insbesondere wenigstens 20 mm, aufweist.

5. Sperrstange nach einem der Ansprüche 1 bis 4,
**dadurch gekennzeichnet, dass**
die Sperrstange (10) einen Anschlag (29) zum Begrenzen der Schwenkbewegung des wenigstens einen äußeren Zahns (24) weg von dem dem Stützfuß (15) gegenüberliegenden Ende der Sperrstange (10) aufweist.

6. Sperrstange nach einem der Ansprüche 1 bis 5,
**dadurch gekennzeichnet, dass**
der wenigstens eine äußere Zahn (24), vorzugsweise der Stützfuß (15), aus einem metallischen Werkstoff, insbesondere Aluminium oder Stahl, gebildet ist und/oder dass der wenigstens eine äußere Zahn (24) in Form einer Rippe ausgebildet ist.

7. Sperrstange nach einem der Ansprüche 1 bis 6,
**dadurch gekennzeichnet, dass**
die Sperrstange (10) an dem dem Stützfuß (15) gegenüberliegenden Ende einen Stützkopf (12) aufweist und, vorzugsweise, dass der Stützkopf (12) analog zu dem Stützfuß (15) ausgebildet ist.

8. Sperrstange nach einem der Ansprüche 1 bis 7,
**dadurch gekennzeichnet, dass**
eine Arretiervorrichtung (21) zur Arretierung der gegeneinander ausziehbaren Sperrstangenelemente (17,18), insbesondere in einer zwischen einem Dach (3) und einem Ladeboden (8) eines Aufbaus (1) verspannten Zustand, vorgesehen ist.

9. Aufbau (1) eines Nutzfahrzeugs (N), insbesondere Lastkraftwagens, Anhängers oder Sattelaufliegers, mit einem Ladeboden (8), einem Dach (3) und wenigstens einer sich zwischen dem Dach (3) und dem Ladeboden (8) erstreckenden Sperrstange (10), vorzugsweise nach einem der Ansprüche 1 bis 8, wobei eine Sperrstange (10) zwischen dem Dach (3) und dem Ladeboden (8) des Aufbaus (1) unter Bereitstellung einer Klemmkraft verspannt ist und wobei an einem Ende der Sperrstange (10) ein Stützfuß (15) um eine Schwenkachse (28) schwenkbar gehalten ist und mit wenigstens einem äußeren Zahn (24) formschlüssig in wenigstens eine Vertiefung (25) des Ladebodens (8) eingreift,
**dadurch gekennzeichnet, dass**
die Distanz (y₁) zwischen der Schwenkachse (28) des Stützfußes (15) und der von der Schwenkachse (28) abgewandten Seite des wenigstens einen äußeren Zahns (24) parallel zu einer Ebene des Ladebodens (8) mindestens der fünffachen Distanz (x₁) zwischen der Schwenkachse (28) und dem freien Ende des wenigsten einen äußeren Zahns (24) senkrecht zur Eben des Ladebodens (8) entspricht.

10. Aufbau nach Anspruch 9,
**dadurch gekennzeichnet, dass**
die Anpresskraft (F_{A}) der Sperrstange (10) gegen den Ladeboden (8) wenigstens 600 N, vorzugsweise wenigstens 800 N, insbesondere wenigstens 1000 N beträgt und/oder dass die Anpresskraft (F_{A}) der Sperrstange (10) gegen den Ladeboden (8) höchstens 2000 N, vorzugsweise wenigstens 1600 N, insbesondere wenigstens 1300 N, beträgt.

11. Aufbau nach Anspruch 9 oder 10,
**dadurch gekennzeichnet, dass**
der Ladeboden (8) aus einem metallischen Werkstoff, vorzugsweise Aluminium oder Stahl, gebildet ist.

12. Aufbau nach einem der Ansprüche 9 bis 11,
**dadurch gekennzeichnet, dass**
der wenigstens eine äußere Zahn (24) formschlüssig in wenigstens eine Rille (27), insbesondere sich quer zur Längserstreckung des Aufbaus (1) erstreckende Rille (27), des Ladebodens (8) eingreift.

13. Aufbau nach einem der Ansprüche 9 bis 12,
**dadurch gekennzeichnet, dass**
sich der Stützfuß (15) der wenigstens einen Sperrstange (10) ausgehend von der Schweckachse (28) in Richtung des wenigstens einen äußeren Zahns (24) in Längsrichtung des Aufbaus (1) und/oder Nutzfahrzeugs (N), vorzugsweise nach hinten bezogen auf den Aufbau (1) und/oder das Nutzfahrzeugs (N), weist.

14. Aufbau nach einem der Ansprüche 9 bis 13,
**dadurch gekennzeichnet, dass**
die Sperrstange (10) an dem dem Stützfuß (15) gegenüberliegenden Ende einen formschlüssig in einer Aufnahme (24), Öffnung oder Vertiefung des Dachs (3) eingreifenden Stützkopf (12) aufweist und, vorzugsweise, dass der Stützkopf (12) analog zum Stützfuß (15) ausgebildet ist.

15. Aufbau nach einem der Ansprüche 9 bis 14,
**dadurch gekennzeichnet, dass**
die Sperrstange (10) wenigstens im Wesentlichen senkrecht zur Ebene des Ladebodens (8) ausgerichtet ist.

## Claims

1. Locking rod (10) for securing cargo in a structure (1) of a commercial vehicle (N), wherein the locking rod (10) has two mutually extendable locking rod elements (17,18) and a clamping device (19) to clamp the locking rod (10) between a roof (3) and a loading floor (8) of the structure (1) and to provide a clamping force in the longitudinal direction of the locking rod (10), wherein a support leg (15) is connected to pivot about a pivot axis (28) at one end of the locking rod (10), and wherein the support leg (15) has at least one outer tooth (24) for positive engagement in at least one recess (25) of a loading floor (8),
**characterised in that**
the distance (y₁) between the pivot axis (28) of the support leg (15) and the side facing away from the pivot axis (28) of the at least one outer tooth (24) transversely to the longitudinal extension of the locking rod (10) is at least five times the distance (x₁) between the pivot axis (28) and the free end of the at least one outer tooth (24) in the longitudinal direction of the locking rod (10).

2. Locking rod according to Claim 1,
**characterised in that**
the distance (y₁) between the pivot axis (28) of the support leg (15) and the side of the at least one outer tooth (24) facing away from the pivot axis (28) transverse to the longitudinal extension of the locking rod (10) is at least seven times, preferably nine times, in particular ten times or eleven times the distance (x₁) between the pivot axis (28) and the free end of the at least one outer tooth (24) in the longitudinal direction of the locking rod (10).

3. Locking rod according to Claim 1 or 2,
**characterised in that**
the distance (y₁) between the pivot axis (28) of the support leg (15) and the side of the at least one outer tooth (24) facing away from the pivot axis (28) transverse to the longitudinal extent of the locking rod (10) is at least 50 mm, preferably 70 mm, in particular 90 mm or 110 mm, and/or that the distance (x₁) between the pivot axis (28) and the free end of the at least one outer tooth (24) in the longitudinal direction of the locking rod (10) is at most 25 mm, preferably at most 20 mm, in particular at most 15 mm, or at most 10 mm.

4. Locking rod according to any one of Claims 1 to 3,
**characterised in that**
the pivot axis (28) is arranged on the side of the central longitudinal axis (32) of the locking rod (10) facing away from the at least one outer tooth (24), in particular the mutually extendable locking rod elements (17, 18), and preferably that the pivot axis (28) is at a distance (y₂) from the central longitudinal axis (32) of at least 10 mm, preferably at least 15 mm, in particular at least 20 mm.

5. Locking rod according to any one of Claims 1 to 4,
**characterised in that**
the locking rod (10) has a stop (29) to limit the pivotal movement of the at least one outer tooth (24) away from the end of the locking rod (10) opposite the support leg (15).

6. Locking rod according to any one of Claims 1 to 5,
**characterised in that**
the at least one outer tooth (24), preferably the support leg (15), is made of a metallic material, in particular aluminum or steel, and/or the at least one outer tooth (24) is in the form of a rib.

7. Locking rod according to any one of Claims 1 to 6,
**characterised in that**
the locking rod (10) has a support head (12) at the end opposite the support leg (15) and, preferably, the support head (12) is designed analogously to the support leg (15).

8. Locking rod according to any one of Claims 1 to 7,
**characterised in that**
a locking device (21) is provided to lock the mutually extendable locking rod elements (17,18), in particular in a braced state between a roof (3) and a loading floor (8) of a structure (1).

9. Structure (1) of a commercial vehicle (N), in particular a truck, trailer or semitrailer, with a loading floor (8), a roof (3) and at least one locking rod (10) extending between the roof (3) and the loading floor (8), preferably according to any one of Claims 1 to 8, wherein a locking rod (10) between the roof (3) and the loading floor (8) of the structure (1) is braced to provide a clamping force, and wherein a support leg (15) is mounted to pivot about a pivot axis (28) at one end of the locking rod (10), and wherein at least one outer tooth (24) positively engages in at least one recess (25) of the loading floor (8),
**characterised in that**
the distance (y₁) between the pivot axis (28) of the support leg (15) and the side of the at least one outer tooth (24) facing away from the pivot axis (28) parallel to a plane of the loading floor (8) is at least five times the distance (x₁) between the pivot axis (28) and the free end of at least one outer tooth (24) perpendicular to the plane of the loading floor (8).

10. Structure according to Claim 9,
**characterised in that**
the contact force (F_{A}) of the locking rod (10) against the loading floor (8) is at least 600 N, preferably at least 800 N, in particular at least 1000 N, and/or that the contact force (F_{A}) of the locking rod (10) against the loading floor (8) is at most 2000 N, preferably at least 1600 N, in particular at least 1300 N.

11. Structure according to Claim 9 or 10,
**characterised in that**
the loading floor (8) is made of a metallic material, preferably aluminum or steel.

12. Structure according to any one of Claims 9 to 11,
**characterised in that**
the at least one outer tooth (24) engages positively in at least one groove (27) in the loading floor (8), in particular a groove (27) extending transversely to the longitudinal extension of the structure (1).

13. Structure according to any one of Claims 9 to 12,
**characterised in that**
the support leg (15) of the at least one locking rod (10), starting from the pivot axis (28) in the direction of the at least one outer tooth (24), points in the longitudinal direction of the structure (1) and/or commercial vehicle (N), preferably towards the rear of the structure (1) and/or the commercial vehicle (N).

14. Structure according to any one of Claims 9 to 13,
**characterised in that**
the locking rod (10) at the end opposite the support leg (15) comprises a form-fitting support head (12) engaging in a receptacle (24), opening or recess of the roof (3) and, preferably, the support head (12) is formed analogously to the support leg (15).

15. Structure according to any one of Claims 9 to 14,
**characterised in that**
the locking rod (10) is aligned at least substantially perpendicular to the plane of the loading floor (8).

## Revendications

1. Barre de verrouillage (10) servant à arrimer un chargement dans une carrosserie (1) d'un véhicule utilitaire (N), la barre de verrouillage (10) possédant deux éléments de barre de verrouillage (17, 18) télescopiques l'un par rapport à l'autre et un dispositif de haubanage (19) destiné à haubaner la barre de verrouillage (10) entre un toit (3) et un fond de chargement (8) de la carrosserie (1) en fournissant une force de serrage dans le sens longitudinal de la barre de verrouillage (10), un pied d'appui (15) étant relié en pivotement autour d'un axe de pivotement (28) à une extrémité de la barre de verrouillage (10) et le pied d'appui (15) possédant au moins une dent externe (24) destinée à venir en prise avec complémentarité de formes dans au moins une cavité (25) d'un fond de chargement (8),
**caractérisée en ce que**
la distance (y₁) entre l'axe de pivotement (28) du pied d'appui (15) et le côté à l'opposé de l'axe de pivotement (28) de l'au moins une dent externe (24) transversalement par rapport à la projection longitudinale de la barre de verrouillage (10) est au moins égale à cinq fois la distance (x₁) entre l'axe de pivotement (28) et l'extrémité libre de l'au moins une dent externe (24) dans le sens longitudinal de la barre de verrouillage (10).

2. Barre de verrouillage selon la revendication 1,
**caractérisée en ce que**
la distance (y₁) entre l'axe de pivotement (28) du pied d'appui (15) et le côté à l'opposé de l'axe de pivotement (28) de l'au moins une dent externe (24) transversalement par rapport à la projection longitudinale de la barre de verrouillage (10) est au moins égale à sept fois, de préférence 9 fois, notamment 10 fois ou 11 fois la distance (x₁) entre l'axe de pivotement (28) et l'extrémité libre de l'au moins une dent externe (24) dans le sens longitudinal de la barre de verrouillage (10).

3. Barre de verrouillage selon la revendication 1 ou 2,
**caractérisée en ce que**
la distance (y₁) entre l'axe de pivotement (28) du pied d'appui (15) et le côté à l'opposé de l'axe de pivotement (28) de l'au moins une dent externe (24) transversalement par rapport à la projection longitudinale de la barre de verrouillage (10) est au moins égale à 50 mm, de préférence à 70 mm, notamment à 90 mm ou à 110 mm et/ou **en ce que** la distance (x₁) entre l'axe de pivotement (28) et l'extrémité libre de l'au moins une dent externe (24) dans le sens longitudinal de la barre de verrouillage (10) est au maximum égale à 25 mm, de préférence au maximum égale à 20 mm, notamment au maximum égale à 15 mm ou au maximum égale à 10 mm.

4. Barre de verrouillage selon l'une des revendications 1 à 3,
**caractérisée en ce que**
l'axe de pivotement (28) est disposé sur le côté de l'axe longitudinal central (32) de la barre de verrouillage (10), notamment des éléments de barre de verrouillage (17, 18) télescopiques l'un par rapport à l'autre, qui se trouve à l'opposé de l'au moins une dent externe (24), et de préférence **en ce que** l'axe de pivotement (28) présente un écart (y2) d'au moins 10 mm, de préférence d'au moins 15 mm, notamment de préférence d'au moins 20 mm par rapport à l'axe longitudinal central (32).

5. Barre de verrouillage selon l'une des revendications 1 à 4,
**caractérisée en ce que**
la barre de verrouillage (10) possède une butée (29) servant à limiter le mouvement de pivotement de l'au moins une dent externe (24) à l'écart de l'extrémité de la barre de verrouillage (10) qui se trouve à l'opposé du pied d'appui (15).

6. Barre de verrouillage selon l'une des revendications 1 à 5,
**caractérisée en ce que**
l'au moins une dent externe (24), de préférence le pied d'appui (15), est constitué d'un matériau métallique, notamment de l'aluminium ou de l'acier, et/ou **en ce que** l'au moins une dent externe (24) est réalisée sous la forme d'une nervure.

7. Barre de verrouillage selon l'une des revendications 1 à 6,
**caractérisée en ce que**
la barre de verrouillage (10) possède une tête d'appui (12) à l'extrémité qui se trouve à l'opposé du pied d'appui (15) et de préférence **en ce que** la tête d'appui (12) est de configuration similaire à celle du pied d'appui (15).

8. Barre de verrouillage selon l'une des revendications 1 à 7,
**caractérisée en ce**
**qu'**il existe un dispositif de blocage (21) destiné à bloquer les éléments de barre de verrouillage (17, 18) télescopiques l'un par rapport à l'autre, notamment dans un état haubané entre un toit (3) et un fond de chargement (8) d'une carrosserie (1).

9. Carrosserie (1) d'un véhicule utilitaire (N), notamment d'un poids-lourd, d'une remorque ou d'une semi-remorque, comprenant un fond de chargement (8), un toit (3) et au moins une barre de verrouillage (10), de préférence selon l'une des revendications de 1 à 8, qui s'étend entre le toit (3) et le fond de chargement (8), une barre de verrouillage (10) étant haubanée entre le toit (3) et le fond de chargement (8) de la carrosserie (1) en fournissant une force de serrage et un pied d'appui (15) étant maintenu en pivotement autour d'un axe de pivotement (28) à une extrémité de la barre de verrouillage (10) venant en prise avec complémentarité de formes, par au moins une dent externe (24), dans au moins une cavité (25) du fond de chargement (8),
**caractérisée en ce que**
la distance (y₁) entre l'axe de pivotement (28) du pied d'appui (15) et le côté à l'opposé de l'axe de pivotement (28) de l'au moins une dent externe (24) parallèlement à un plan du fond de chargement (8) est au moins égale à cinq fois la distance (x₁) entre l'axe de pivotement (28) et l'extrémité libre de l'au moins une dent externe (24) perpendiculairement au plan du fond de chargement (8).

10. Carrosserie selon la revendication 9,
**caractérisée en ce que**
la force de pressage (F_{A}) de la barre de verrouillage (10) contre le fond de chargement (8) est au moins égale à 600 N, de préférence au moins égale à 800 N, notamment de préférence au moins égale à 1000 N et/ou que la force de pressage (F_{A}) de la barre de verrouillage (10) contre le fond de chargement (8) est au maximum égale à 2000 N, de préférence au moins égale à 1600 N, notamment au moins égale à 1300 N.

11. Carrosserie selon la revendication 9 ou 10,
**caractérisée en ce que**
le fond de chargement (8) est constitué d'un matériau métallique, de préférence de l'aluminium ou de l'acier.

12. Carrosserie selon l'une des revendications 9 à 11,
**caractérisée en ce que**
l'au moins une dent externe (24) vient en prise avec complémentarité de formes dans au moins une nervure (27) du fond de chargement (8), notamment une nervure (27) qui s'étend transversalement à la projection longitudinale de la carrosserie (1).

13. Carrosserie selon l'une des revendications 9 à 12,
**caractérisée en ce que**
le pied d'appui (15) de l'au moins une barre de verrouillage (10), à partir de l'axe de pivotement (28), est dirigé en direction de l'au moins une dent externe (24) dans le sens longitudinal de la carrosserie (1) et/ou du véhicule utilitaire (N), de préférence vers l'arrière en référence à la carrosserie (1) et/ou au véhicule utilitaire (N).

14. Carrosserie selon l'une des revendications 9 à 13,
**caractérisée en ce que**
la barre de verrouillage (10) possède, à l'extrémité qui se trouve à l'opposé du pied d'appui (15), une tête d'appui (12) qui vient en prise avec complémentarité de formes dans un logement (24), une ouverture ou une cavité du toit (3), et de préférence **en ce que** la tête d'appui (12) est de configuration similaire à celle du pied d'appui (15).

15. Carrosserie selon l'une des revendications 9 à 14,
**caractérisée en ce que**
la barre de verrouillage (10) est orientée au moins sensiblement perpendiculairement au plan du fond de chargement (8).
